# EUROPÄISCHE PATENTSCHRIFT

(11) **EP 4 403 994 B1**
(45) Veröffentlichungstag und Bekanntmachung des Hinweises auf die Patenterteilung: **19.08.2026**
(21) Anmeldenummer: 23215905.3
(22) Anmeldetag: 12.12.2023
(51) Int. Cl.: G03B 15/03, G03B 17/56, G02B 7/00, H04N 21/00

(54) **ADAPTERSYSTEM ZUR BEFESTIGUNG VON ZUBEHÖRTEILEN AN EINEM BLITZSCHUH**
ADAPTER SYSTEM FOR ATTACHING ACCESSORIES TO A FLASH BOOT
SYSTÈME ADAPTATEUR POUR FIXER DES ACCESSOIRES À UNE CHAUSSURE DE FLASH

(30) Priorität: 27.12.2022 DE 102022134811
(43) Veröffentlichungstag der Anmeldung: 24.07.2024
(73) Patentinhaber: Sennheiser electronic SE & Co. KG, 30900 Wedemark (DE)
(72) Erfinder: Heine, Lars, 38179 Schwülper (DE); von Allwörden, Tobias, 21521 Aumühle (DE); Thormann, Jörg-Peter, 31655 Stadthagen (DE); Kittmann, Ralf, 8707 Uetikon am See (CH); Buckmann, Stefan, 31303 Burgdorf (DE); Riebesel, Hjördis, 30173 Hannover (DE); Engelking, Dirk, 30916 Isernhagen (DE)
(74) Vertreter: Eisenführ Speiser

(56) Entgegenhaltungen:
- US-A1- 2010 135 506
- US-A1- 2011 119 409
- US-B1- 11 516 568
- ANONYMOUS: "Kinematische magnetische Montageplatten | Edmund Optics", 17 April 2020 (2020-04-17), online, XP093158565, Retrieved from the Internet <URL:https://www.edmundoptics.com/f/kinematic-magnetic-base-plates/39923/> [retrieved on 20240502]

## Beschreibung

Die vorliegende Erfindung betrifft ein Adaptersystem zur Befestigung von Zubehörteilen an einem Blitzschuh.

Als Stand der Technik ist aus der US 2010/0135506 A1 ein Mikrofoneinheitssystem mit einem Blitzschuhadapter bekannt.

Im semiprofessionellen Bereich der mobilen Videoaufzeichnung werden an einer Videokamera mehrere Bauelemente wie beispielsweise ein Drahtlos-Empfänger für Audiosignale angebracht. Dies erfolgt typischerweise an einem Blitzschuh einer Kamera. Ferner können Rigs und Gimbal-Rigs für Kameras verwendet werden. Ein derartiger Rig wird mit der Kamera verbunden und Drahtlos-Empfänger sowie andere Bauelemente können dann an dem Rig befestigt werden. Derartige Bauteile können beispielsweise ein Monitor, ein Richtmikrofon, Handgriffe, Power Bank, Audiorecorder etc. darstellen.

Es ist eine Aufgabe der vorliegenden Erfindung, eine verbesserte Befestigungsmöglichkeit von Zubehörbauteilen für einen mobilen Einsatz zur Audio- und/oder Videoaufzeichnung vorzusehen.

Diese Aufgabe wird durch ein Adaptersystem nach Anspruch 1 gelöst.

Somit wird ein Adaptersystem zum Befestigen von Zubehörteilen an einem Blitzschuh vorgesehen. Das Adaptersystem weist eine Adapterplatte mit einer Mehrzahl von ersten Bohrungen, einer Mehrzahl von zweiten Bohrungen, vier Ecken mit jeweils einer dritten Bohrung und mindestens einem magnetischen Element im Bereich der dritten Bohrungen auf.

Gemäß einem weiteren Aspekt der vorliegenden Erfindung weist die Adapterplatte eine Mehrzahl von vierten Bohrungen auf.

Gemäß einem weiteren Aspekt der vorliegenden Erfindung weist die Adapterplatte vier Seitenflächen und eine Mehrzahl von ersten und zweiten Längsbohrungen im Bereich der vierten Seitenflächen auf.

Gemäß einem weiteren Aspekt der vorliegenden Erfindung weist die Adapterplatte mindestens eine Bohrung in oder an mindestens einer der Seitenflächen auf.

Gemäß einem weiteren Aspekt der vorliegenden Erfindung weist der Blitzschuhadapter an seiner zweiten Seite mindestens zwei Dome auf, deren Außendurchmesser an einen Innendurchmesser der dritten Bohrungen angepasst ist, so dass die Dome in die dritten Bohrungen einführbar sind.

Die Erfindung betrifft ebenfalls eine Adapterplatte zur Befestigung von Zubehörteilen an einem Blitzschuh. Die Adapterplatte weist eine Mehrzahl von ersten Bohrungen, vier Ecken jeweils mit einer dritten Bohrung und mindestens einem magnetischen Element im Bereich der dritten Bohrungen auf.

Die Erfindung betrifft ebenfalls einen Drahtlos-Audioempfänger mit einer ersten und zweiten Seite, eine Mehrzahl von Domen mit magnetischen Elementen auf der zweiten Seite und einer Mehrzahl von Ausnehmungen mit magnetischen Elementen auf der ersten Seite.

Gemäß einem Aspekt der vorliegenden Erfindung sind die Abmessungen der Ausnehmungen an die Abmessungen der Dome angepasst.

Die Adapterplatte kann beispielsweise an einem Blitzschuh einer Kamera befestigt werden. Die Adapterplatte weist eine Platte mit einer Mehrzahl von Bohrungen, Senkbohrungen und/oder Langlochsenken auf.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Draufsicht auf eine Adapterplatte gemäß einem ersten Ausführungsbeispiel,
- Fig. 2A: zeigen jeweils verschiedene perspektivische Ansichten einer Adapter-
- bis 2C: platte sowie eines Blitzschuhadapters,
- Fig. 3A: zeigen jeweils eine perspektivische Ansicht einer Adapterplatte,
- und 3B: eines Blitzschuhadapters sowie zwei Drahtlos-Empfängern,
- Fig. 4A: zeigen jeweils eine schematische und perspektivische Ansicht eines
- und 4B: Ausschnitts einer Adapterplatte, eines Blitzschuhadapters sowie eines Drahtlos-Empfängers gemäß einem weiteren Ausführungsbeispiel der Erfindung,
- Fig. 5A: zeigen jeweils eine perspektivische Ansicht einer Digitalkamera mit
- bis 5C: einer Adapterplatte sowie Drahtlos-Empfängern gemäß einem weiteren Ausführungsbeispiel der Erfindung,
- Fig. 6: zeigt eine perspektivische Ansicht einer Befestigung einer Adapterplatte gemäß einem weiteren Ausführungsbeispiel der Erfindung,
- Fig. 7: zeigt eine perspektivische Ansicht einer Digitalkamera mit zwei Drahtlos-Empfängern,
- Fig. 8: zeigt eine Unterseite eines Drahtlos-Audioempfängers gemäß einem weiteren Ausführungsbeispiel der Erfindung,
- Fig. 9: zeigt eine schematische Draufsicht auf eine Adapterplatte gemäß einem zweiten Ausführungsbeispiel,
- Fig. 10: zeigt eine weitere schematische Draufsicht auf die Adapterplatte gemäß dem zweiten Ausführungsbeispiel,
- Fig. 11: zeigt eine weitere schematische Draufsicht auf die Adapterplatte gemäß dem zweiten Ausführungsbeispiel,
- Fig. 12A: zeigen jeweils eine schematische Ansicht einer Adapterplatte mit
- und 12B: einem Blitzschuhadapter, und
- Fig. 13A bis 13E: zeigen verschiedene Ansichten eines Blitzschuhadapters.

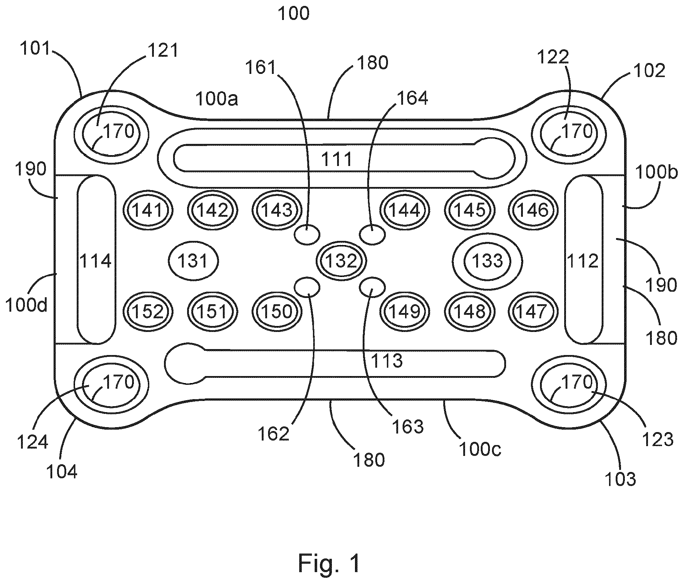

Fig. 1 zeigt eine schematische Draufsicht auf eine Adapterplatte gemäß einem ersten Ausführungsbeispiel. Die Adapterplatte 100 kann als Platte mit einer Mehrzahl von Löchern oder Senkbohrungen sowie Langlöchern oder Langsenken ausgestaltet sein. Die Platte 100 kann optional eine im Wesentlichen rechteckige Grundform aufweisen. Die Platte 100 kann vier Ecken 101, 102, 103, 104 sowie vier Seiten 100a, 100b, 100c, 100d, zwei lange Seiten 100a, 100c und zwei kurze Seiten 100b, 100d aufweisen. Im Bereich der jeweiligen Ecken 101 - 104 sind Senkbohrungen 121, 122, 123, 124 vorgesehen. Im Bereich der Senkbohrungen 121 - 124 können Gewinde wie beispielsweise Stativgewinde vorgesehen sein. In dem Bereich der Senkbohrungen 121 - 124 sind ferromagnetische Elemente oder Magnete 170 vorgesehen. Die ferromagnetischen Elemente oder Magnete 170 können so in den Senkbohrungen 121 - 124 angeordnet sein, dass jeweils eine Vertiefung gegenüber der Oberfläche der Adapterplatte 100 verbleibt.

Entlang der Seitenflächen können Langlochsenken 111, 112, 113, 114 vorgesehen sein. An den beiden Langseiten 100a, 100c können zwei erste Langlochsenken 111, 113 und an den kurzen Seiten 100b, 100d können zwei zweite Langlochsenken 112, 114 vorgesehen sein.

An den Seitenflächen können Bohrungen 180 (z. B. mit Gewinden 181) vorgesehen sein. Diese Bohrungen 180 können dazu dienen, Enden eines Bügels aufzunehmen.

An den kurzen Seiten 100b, 100d können Ausnehmungen 190 vorgesehen sein, so dass die Höhe der Platte an der Seite 100b, 100d kleiner ist als der Rest der Platte.

Optional können entlang einer mittleren Längsachse der Adapterplatte drei Löcher 131, 132, 133 vorgesehen sein. Das zweite Loch 132 ist dabei im Wesentlichen in der Mitte der Adapterplatte 100 vorgesehen. Parallel zu den ersten Langlochsenken 111, 113 können optional zwölf Senkbohrungen 141 - 152 vorgesehen sein, wobei sechs Senkbohrungen 141 - 146 neben der ersten Langlochsenke 111 angeordnet sind und sechs Senkbohrungen 147 - 152 benachbart zu der anderen ersten Langlochsenke 113 angeordnet sind. Um die mittlere Senkbohrung 132 herum können vier Senkbohrungen 161 - 164 angeordnet sein.

Optional können sich die Bohrungen 150, 162, 132, 164, 144 entlang einer Gerade befinden. Optional können sich die Bohrungen 143, 161, 132, 163, 149 entlang einer Gerade befinden. Die Bohrungen 141, 142, 143, 144, 145, 146 können sich ebenfalls entlang einer Gerade erstrecken. Die Bohrungen 147, 148, 149, 150, 151, 152 können sich entlang einer Gerade erstrecken und parallel zu den Bohrungen 141 - 146 angeordnet sein. Die Bohrungen 131, 132, 133 erstrecken sich ebenfalls entlang einer Gerade.

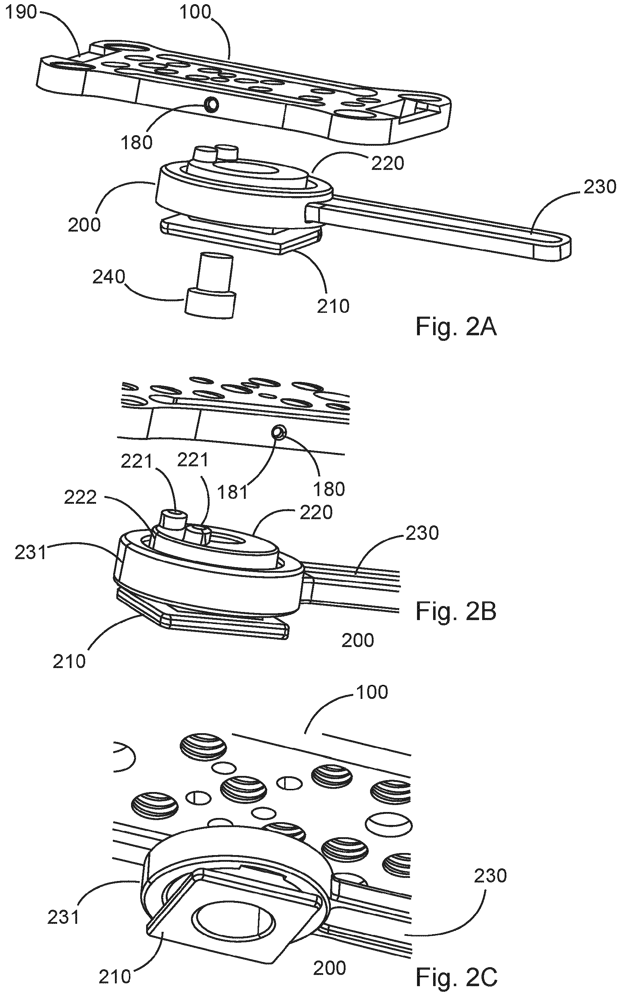

Fig. 2A bis 2C zeigen jeweils verschiedene perspektivische Ansichten einer Adapterplatte sowie eines Blitzschuhadapters. Die Adapterplatte 100 beispielsweise von Fig. 1 kann mittels eines Blitzschuhadapters 200 an einem Blitzschuh einer Videokamera befestigt werden. Der Blitzschuhadapter 200 weist ein inneres Element 222 und ein beispielsweise ringförmiges äußeres Element 231 auf. Das innere Element 222 weist ein erstes Ende 210 zur Montage in einem Blitzschuh und ein zweites Ende 220 zur Montage in oder an der Adapterplatte 100 auf. Das erste Ende 210 ist rechteckig ausgestaltet und ist dazu geeignet in einen Blitzschuh eingeschoben zu werden. Der Blitzschuhadapter 200 kann dann wie nachfolgend beschrieben mithilfe des äußeres Elements 231 an dem Blitzschuh festgeklemmt werden.

An dem zweiten Ende 220 können beispielsweise zwei Vorsprünge oder Dome 221 vorgesehen sein. Diese beiden Dome 221 können in die Senkbohrungen 161 - 164 eingeführt werden. Optional kann eine Schraube 240 vorgesehen sein, um den Blitzschuhadapter an der Adapterplatte 100 zu befestigen. Optional kann die Schraube 240 in die zentrale Senkbohrung 132 geschraubt werden, um den Blitzschuhadapter 200 an der Adapterplatte 100 zu befestigen. Das innere Element 222 weist ein Außengewinde (nicht dargestellt) auf. Das äußere Element 231 weist ein Innengewinde (nicht dargestellt) auf, welches auf das Außengewinde des inneren Elementes 222 aufgeschraubt ist. Ferner ist an dem äußeren Element 231 ein Hebel oder Griff 230 angebracht, mittels welchem das äußere Element 231 gegenüber dem inneren Element 222 verdreht werden kann, sodass das äußere Element 231 auf dem Gewinde seinen Abstand zu dem rechteckigen ersten Ende 210 des inneren Elements 222 verändert. Auf diese Weise kann ein Teil des Blitzschuhs zwischen dem rechteckigen ersten Ende 210 des inneren Elements 222 und dem äußeren Element 231 eingeklemmt und somit eine zuverlässige Befestigung erzielt werden. Der Hebel 230 dient dazu, die zum Festklemmen notwendige Drehbewegung des äußeren Elements 231 durchzuführen, da das äußere Element zwischen der Kamera und der Adapterplatte 100 schlecht mit den Fingern zu erreichen ist, wenn das erste Ende 210 in den Blitzschuh eingesteckt ist.

Durch das Einsetzen der beiden Dome 221 in zwei der vier Löcher 161 - 164 und durch Befestigung des Blitzschuhadapters 200 an der Adapterplatte 100 mittels der Schraube 240 wird eine formschlüssige und verdrehsichere Befestigung der Adapterplatte an dem Blitzschuhadapter 200 erreicht. Die Senkbohrungen 161 - 164 weisen einen Innendurchmesser auf, welcher an den Außendurchmesser der Dome 221 angepasst ist. Optional kann anstelle der beiden Dome 221 auch ein einzelner Vorsprung 221 vorgesehen sein, um eine formschlüssige und verdrehsichere Befestigung zu bewerkstelligen.

Das Material der Adapterplatte 100 kann sowohl Metall als auch Kunststoff darstellen. Falls die Adapterplatte 100 aus Kunststoff ausgestaltet ist, dann können metallische Innengewinde in einigen der Senkbohrungen, insbesondere in den Senkbohrungen 131 - 133, vorgesehen sein. Insbesondere mittels der Senkbohrungen 141 - 152 sowie der Senkbohrungen 131, 132 und 133 sowie optional mittels der Senkbohrungen 121 - 124 kann die Adapterplatte auch an einem Rig unmittelbar befestigt werden. Alternativ dazu kann die Adapterplatte auch an einem Magicarm, einem Gelenkadapter, einem Handgriff, Stativköpfen oder Stativschnellwechselplatten verschraubt werden.

Das Gewinde zwischen dem inneren Element 222 und dem äußeren Element 231 kann mit einer steilen Steigung ausgeführt sein, die dazu führt, dass das Festklemmen an dem Blitzschuh ohne eine vollständige Umdrehung des äußeren Elements 231 ermöglicht wird. Optional kann dies durch eine halbe Drehung erfolgen. Es ist jedoch auch möglich, dass eine ganze Drehung, eine Dreivierteldrehung oder eine Vierteldrehung zur Befestigung ausreicht. Das Gewinde zwischen dem inneren Element 222 und dem äußeren Element 231 kann eine Steigung im Bereich von 1,0 bis 2,0 mm pro Umdrehung aufweisen. Bevorzugt wird eine Steigung von 1,5 mm pro Umdrehung, was das Festklemmen durch eine halbe Umdrehung ermöglicht. Dies ist vorteilhaft, da der Nutzer anhand der Stellung des Hebels 230 einfach erkennen kann, ob der Blitzschuhadapter 200 bereits festgeklemmt ist, oder zur Entnahme gelöst ist.

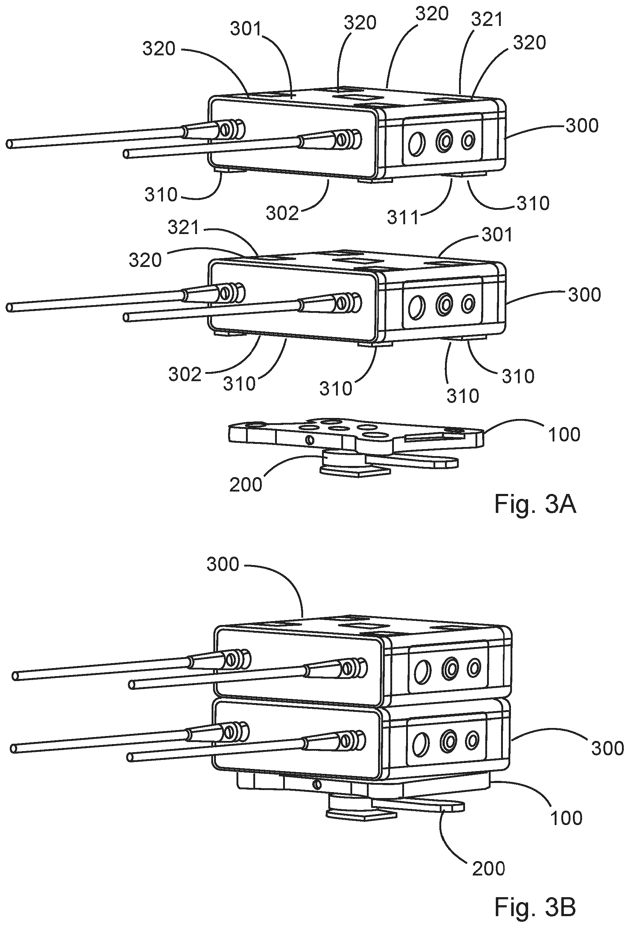

Fig. 3A und 3B zeigen jeweils eine perspektivische Ansicht einer Adapterplatte, eines Blitzschuhadapters sowie zwei Drahtlos-Empfängern. Die Empfänger 300 können an ihrer Oberseite 301 beispielsweise vier Ausnehmungen 320 und an ihrer Unterseite 302 vier Dome 310 aufweisen. Die Dome 310 können an die Bohrungen 121 - 124 angepasst sein. Die Vertiefungen in der Adapterplatte 100, welche über den ferromagnetischen Elementen oder Magneten 170 verbleiben, sind an die Dome 310 angepasst, sodass der Empfänger 300 magnetisch in einer mechanisch festgelegten Ausrichtung an der Adapterplatte 100 befestigt werden kann. Die Ausnehmungen 320 sind ebenfalls an die Dome 310 angepasst. Optional kann im Bereich der Ausnehmungen 320 ein Magnet 321 oder ein ferromagnetisches Element vorgesehen sein. Im Bereich der Dome 310 können ebenfalls Magnete und/oder ferromagnetische Elemente 311 vorgesehen sein. Damit kann ein Empfänger 300 auf dem anderen platziert werden, wobei der zweite Empfänger magnetisch an dem ersten Empfänger gehalten wird. Jeder einzelne Empfänger 300 kann also entweder magnetisch direkt an der Adapterplatte 100 oder gestapelt an der Oberseite eines weiteren Empfängers 300 angebracht werden. Die Verwendung mehrerer Empfänger kann für die Realisierung einer Mehrkanal-Anwendung nötig sein.

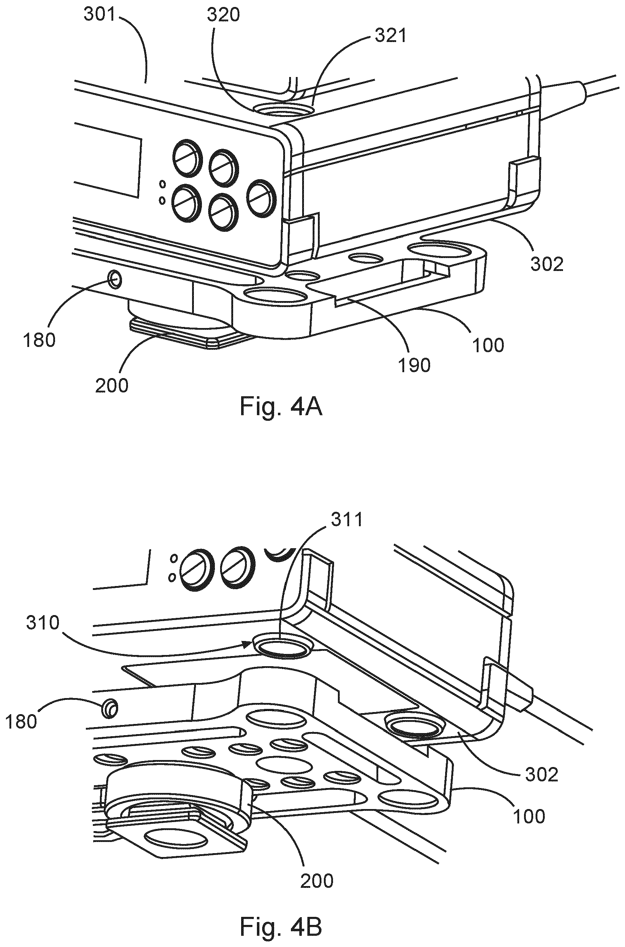

Fig. 4A und 4B zeigen jeweils eine schematische und perspektivische Ansicht eines Ausschnitts einer Adapterplatte, eines Blitzschuhadapters sowie eines Drahtlos-Empfängers gemäß einem weiteren Ausführungsbeispiel der Erfindung. Ein Zubehörelement 300 wie beispielsweise ein Drahtlos-Audioempfänger 300 kann an seiner Unterseite 302 beispielsweise vier Dome 310 aufweisen. Die Dome 310 können insbesondere im Bereich der Ecken der Unterseite 302 des Drahtlos-Empfängers vorgesehen sein. Die Ausgestaltung der Dome 310 ist derart, dass sie in die Senkbohrungen 121 - 124 passen können. Optional weisen die Dome 310 magnetische Elemente 311 auf. Die Adapterplatte 100 weist im Bereich der Senkbohrungen 121 - 124 ebenfalls magnetische Elemente auf, so dass der Empfänger 300 magnetisch in oder an der Adapterplatte 100 gehalten wird. Ferner kann durch die mechanische Ausgestaltung der Dome, welche an die Innendurchmesser der Senkbohrungen 121 - 124 angepasst ist, ein Längs- oder Querverschieben des Empfängers bezüglich der Adapterplatte vermieden werden.

Optional können die Drahtlos-Empfänger an ihrer Oberseite 301 und insbesondere im Bereich der Ecken vier Ausnehmungen 320 aufweisen, welche jeweils optional magnetische Elemente 321 aufweisen. Der Innendurchmesser der Ausnehmungen 320 ist an den Außendurchmesser der Dome 310 angepasst, so dass ein zweiter Drahtlos-Empfänger 300 auf dem ersten Drahtlos-Empfänger 300 platziert ist und magnetisch mittels der Magnetelemente 311, 321 gehalten wird. Somit können ohne Weiteres zwei Empfängereinheiten 300 auf der Adapterplatte 300 gehalten (insbesondere magnetisch gehalten) werden. Dies ist vorteilhaft, weil damit keine weitere Befestigung der Empfänger benötigt wird.

Alternativ zu den in den Figuren 2 bis 4 gezeigten Ausführungsformen kann die Adapterplatte auch ohne den Blitzschuhadapter 200 an einer Kamera bzw. einer Haltevorrichtung befestigt werden.

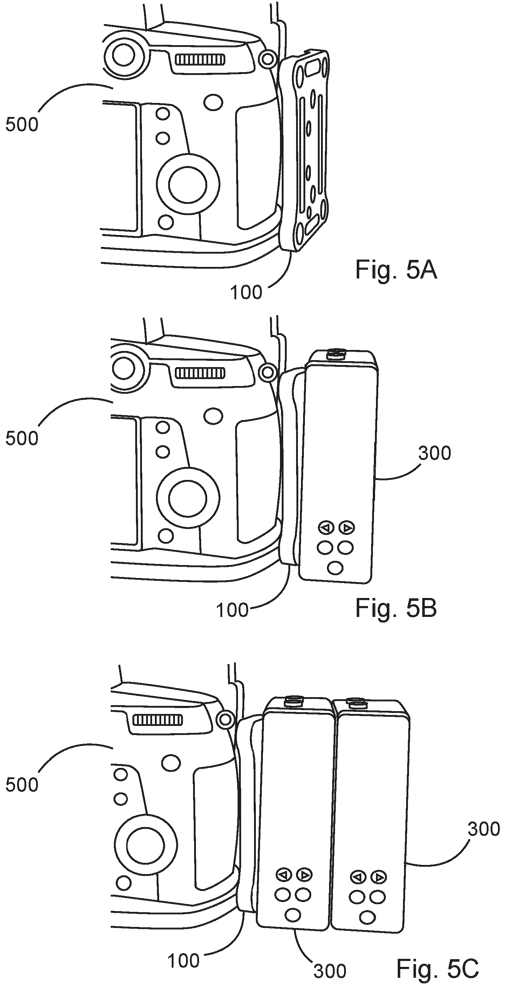

Fig. 5A bis 5C zeigen jeweils eine perspektivische Ansicht einer Digitalkamera 500 mit einer Adapterplatte 100 sowie Drahtlos-Empfängern gemäß einem weiteren Ausführungsbeispiel der Erfindung. An den Längsseiten und/oder an den kürzeren Seiten können Bohrungen 180 optional mit Gewinde vorgesehen sein.

Damit kann wie in Fig. 5 gezeigt eine Adapterplatte 100 an der Seite einer Kamera 500 bzw. an einem Rig, welches mit der Kamera verbunden ist, befestigt werden. Somit können Empfänger 300 auch seitlich an der Kamera (wie in Fig. 5B und 5C gezeigt) befestigt werden.

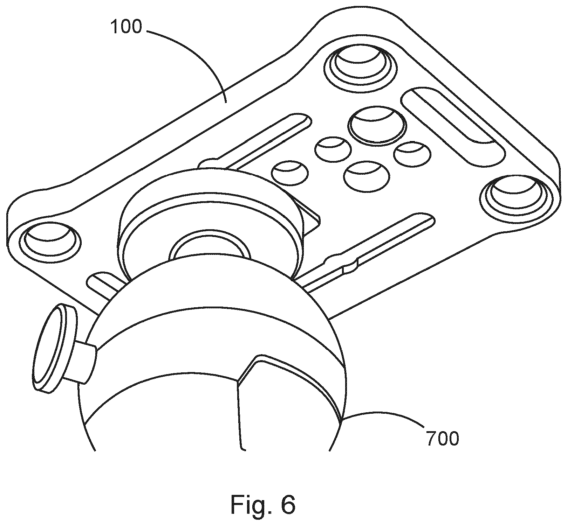

Fig. 6 zeigt eine perspektivische Ansicht einer Befestigung einer Adapterplatte 100 gemäß einem weiteren Ausführungsbeispiel der Erfindung. In Fig. 6 ist die Adapterplatte 100 an einem Schwenkarm 700 befestigt.

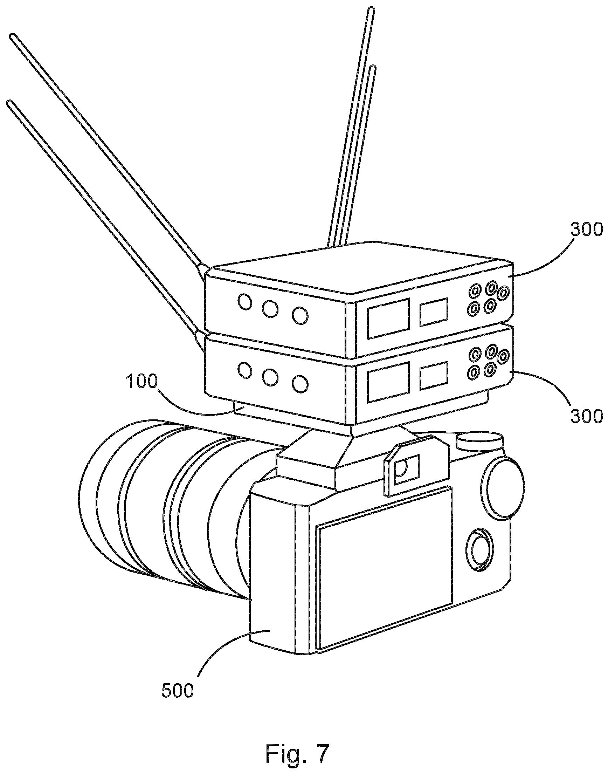

Fig. 7 zeigt eine perspektivische Ansicht einer Digitalkamera 500 mit zwei Drahtlos-Empfängern 300. In Fig. 7 sind zwei Empfänger 300 (beispielsweise wie in Fig. 3A und 3B gezeigt) aufeinander platziert. Der untere Empfänger 300 ist dann auf der Adapterplatte 100 platziert.

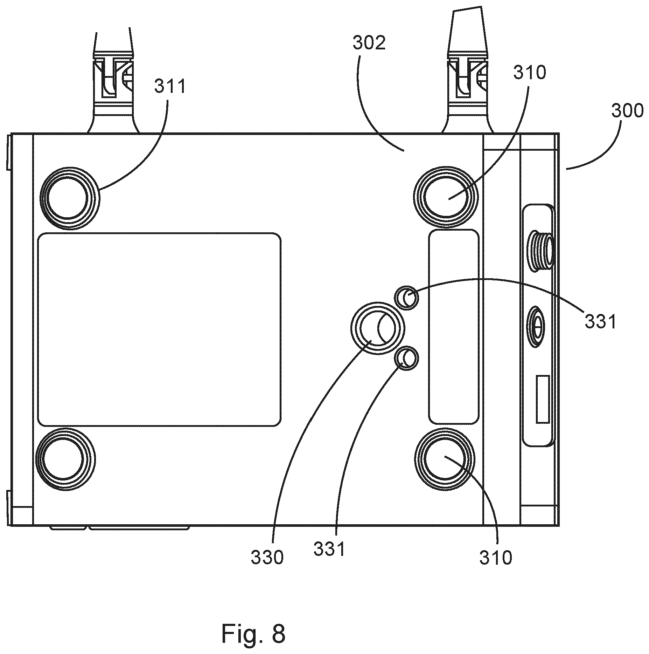

Fig. 8 zeigt eine Unterseite eines Drahtlos-Audioempfängers gemäß einem weiteren Ausführungsbeispiel der Erfindung. Zusätzlich zu den Domen 310, welche jeweils eine Magneteinheit 311 aufweisen können, kann ein Stativgewindeeinsatz 330 vorgesehen sein, um den Empfänger direkt auf einem Stativgewinde platzieren zu können. Der Stativgewindeeinsatz 330 kann an dem Zubehörelement 300 bezüglich der Dome 310 so platziert sein, dass er mit einer Schraube durch eines der Löcher 131, 132 und 133 an der Adapterplatte 100 fixiert werden kann, wenn die Dome 310 in den Senkbohrungen 121, 122, 123, 124, bzw. den entsprechenden Vertiefungen über den ferromagnetischen Elementen 170 positioniert sind. Auf diese Weise kann die trennbare magnetische Verbindung zusätzlich abgesichert werden.

Neben dem Stativgewinde 330 können an der Unterseite 302 des Zubehörelements 300 Ausnehmungen 331 vorgesehen werden, welche bezüglich dem Stativgewinde 330 genauso angeordnet sind, wie die Senkbohrungen 161 - 164 bezüglich der mittleren Senkbohrung 132 in der Adapterplatte 100. Somit kann der Blitzschuhadapter 200 auch ohne die Adapterplatte 100 in entsprechender Weise direkt an dem Zubehörelement 300 befestigt werden.

Insgesamt entsteht ein vielseitiges Verbindungssystem, bei dem die Adapterplatte 100, der Blitzschuhadapter 200 sowie mehrerer Zubehörelemente 300 in verschiedenen Kombinationen auf verschiedene Weise an einem Kamerasystem befestigt werden können.

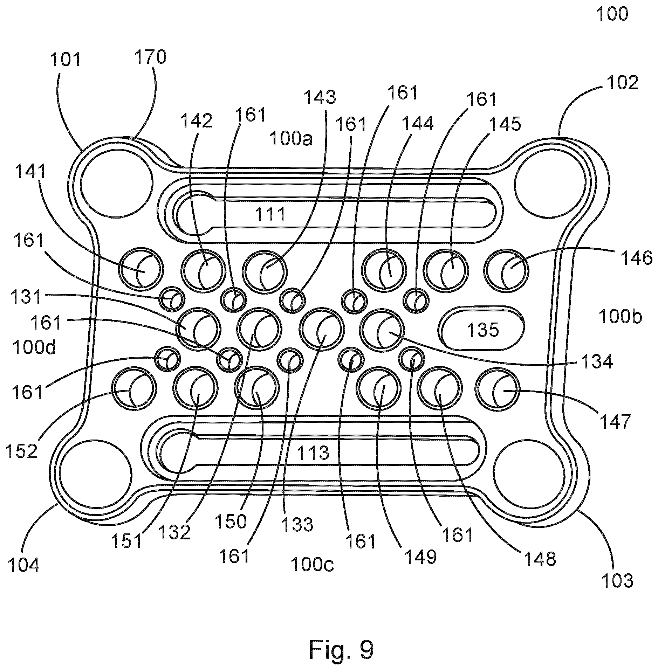

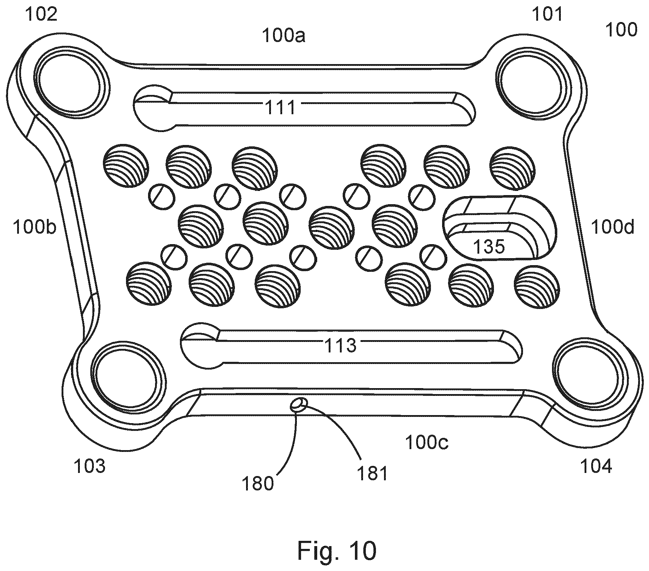

Fig. 9 und 10 zeigen jeweils eine schematische Draufsicht auf eine Adapterplatte gemäß einem zweiten Ausführungsbeispiel. Die Adapterplatte 100 weist eine Mehrzahl von Löchern oder Senklöchern sowie Langlöcher oder Langsenken auf, welche zur Montage von einem Blitzschuhadapter und/oder Komponenten für eine Kamera oder einen Drahtlossender verwendet werden können. Die Platte 100 kann optional eine im Wesentlichen rechteckige Grundform mit vier Ecken 101, 102, 103, 104 sowie vier Seiten 100a, 100b, 100c, 100d aufweisen. Die Platte 100 weist dabei zwei lange Seiten 100a, 100c und zwei kurze Seiten 100b, 100d auf. Optional kann die Platte 100 auch als Quadrat ausgestaltet sein, in diesem Fall wären die Seiten dann alle im Wesentlichen gleich lang.

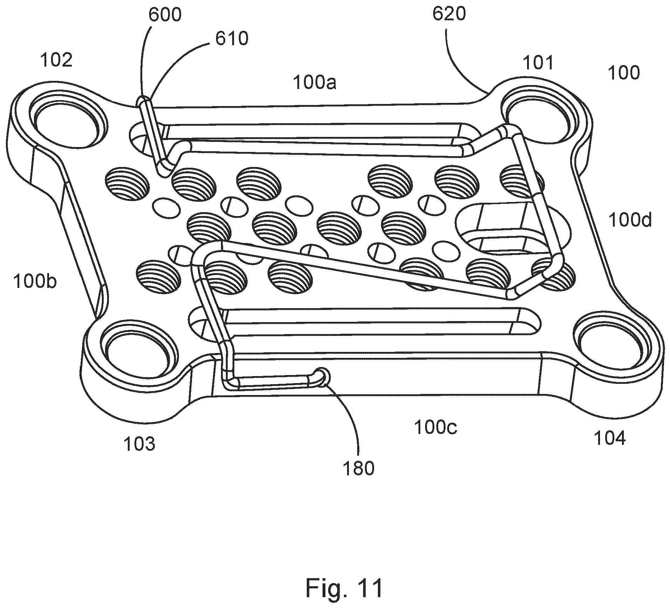

Entlang den beiden längeren Seiten 100a, 100c sind zwei Langlochsenken 111, 113 vorgesehen. Im Bereich der langen Enden 100a, 100c können jeweils Bohrungen 180 optional mit Gewinden 181 vorgesehen sein. Diese Bohrungen 180 mit Gewinden 181 dienen dazu (wie in Fig. 11 dargestellt), einen Bügel 600 aufzunehmen. Der Bügel 600 weist dabei erste Enden 610 und ein zweites Ende 620 auf. Die ersten Enden 610 werden dabei in den Löchern 180 befestigt.

Die Platte 100 weist erste Löcher 131 - 134 sowie ein erstes Langloch 135 auf. Diese ersten Bohrungen 131 - 134 befinden sich im Wesentlichen in der Mitte zwischen der ersten und dritten Seite 100a, 100c. Diese ersten Bohrungen können dazu verwendet werden, Schrauben aufzunehmen, mit welchen Zubehörteile an der Adapterplatte verschraubt werden können. Die Platte 100 weist ferner zweite Löcher 161 auf, welche um die ersten Löcher 131 - 134 herum angeordnet sind und dazu dienen können, einen Dom des Blitzschuhadapters aufzunehmen. Optional sind zehn zweite Löcher 161 vorgesehen. Die zweiten Löcher 161 sind so angeordnet, dass um jedes der ersten Löcher 131 - 134 vier erste Löcher 161 herum angeordnet sind. Dies erlaubt eine hohe Flexibilität bei der Befestigung des Blitzschuhadapters an der Adapterplatte.

Die Adapterplatte 100 weist ferner dritte Löcher 141 - 152 auf. Die dritten Löcher 141 - 152 sind optional jeweils zwischen den ersten Löchern und dem ersten Langloch 111 oder zwischen den ersten Löchern 161 und dem Langloch 113 vorgesehen. Optional sind zwölf dritte Löcher 141 - 152 in der Adapterplatte 100 vorgesehen. Hierbei können drei dritte Löcher 141, 142, 143 im Bereich der vierten Seite 100d zwischen dem Langloch 111 und drei zweiten Löchern 161 vorgesehen sein. Ferner können drei weitere dritte Löcher 150 - 152 im Bereich der vierten Seite 100d zwischen dem Langloch 113 und drei zweiten Löchern 161 vorgesehen sein. Ferner können optional drei dritte Löcher 144 - 146 im Bereich der zweiten Seite 100b zwischen dem Langloch 111 und dem ersten Loch 134 sowie dem Langloch 135 angeordnet sein. Ferner können optional drei dritte Löcher 147, 148, 149 im Bereich der zweiten Seite 100b zwischen dem Langloch 103 und einem ersten Loch 134 und einem Langloch 135 angeordnet sein.

An den jeweiligen vier Ecken 101 - 104 können Senkbohrungen 121 - 124 (dritte Bohrungen) vorgesehen sein. Die Senkbohrungen 121 - 124 können optional Gewinde aufweisen, um beispielsweise an einem Stativ montiert zu werden. Optional können Magnete in den Senkbohrungen 121 - 124 vorgesehen sein. Optional können die Magnete in den Senkbohrungen 121 - 124 so angeordnet sein, dass jeweils eine Vertiefung gegenüber einer Oberfläche der Adapterplatte 101 verbleibt.

Fig. 11 zeigt eine weitere schematische Draufsicht auf die Adapterplatte gemäß dem zweiten Ausführungsbeispiel. In Fig. 11 ist die Adapterplatte gemäß dem zweiten Ausführungsbeispiel zusammen mit einem Haltebügel 600 dargestellt.

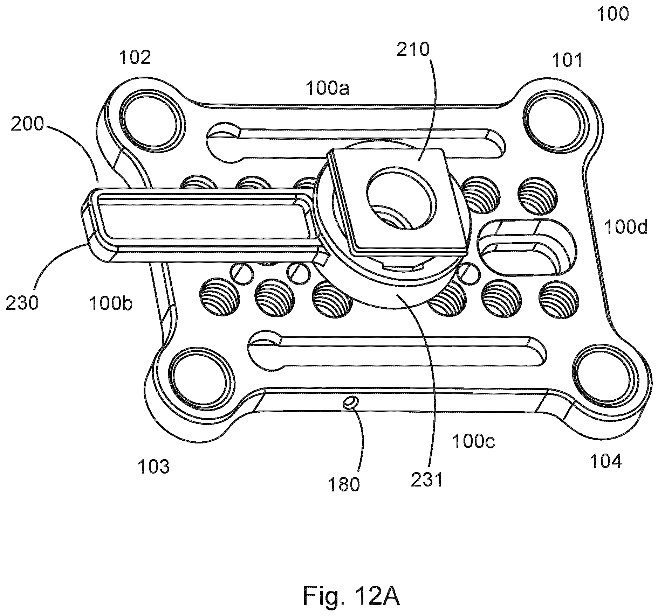

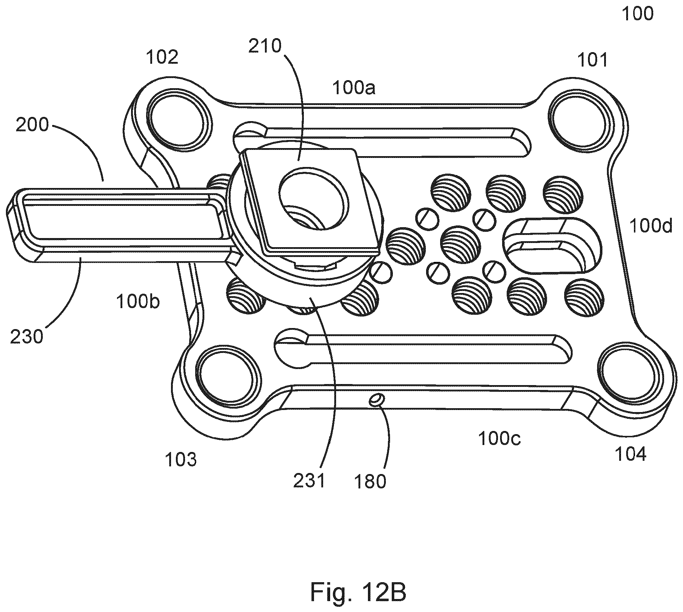

Fig. 12A und 12 B zeigen jeweils eine schematische Ansicht einer Adapterplatte mit einem Blitzschuhadapter. In den Figuren 12A und 12B ist jeweils eine Adapterplatte 100 mit einem Blitzschuhadapter 200 dargestellt, wobei der Blitzschuhadapter in bzw. an der Adapterplatte 100 montiert ist. Wie aus den Figuren 12A und 12B zu sehen, kann der Blitzschuhadapter 200 an verschiedenen Stellen in oder an der Adapterplatte 100 montiert sein. Dazu können die ersten Löcher 131 - 134 jeweils mit einem Innengewinde versehen sein. Der der Blitzschuhadapter 200 kann dann mit Hilfe einer Schraube 240 wahlweise an eines der ersten Löcher 131 - 134 angeschraubt werden. An der ersten und dritten Seite 100a, 100c kann jeweils ein Loch oder eine Bohrung 180 zur Aufnahme des Bügels 600 vorgesehen sein.

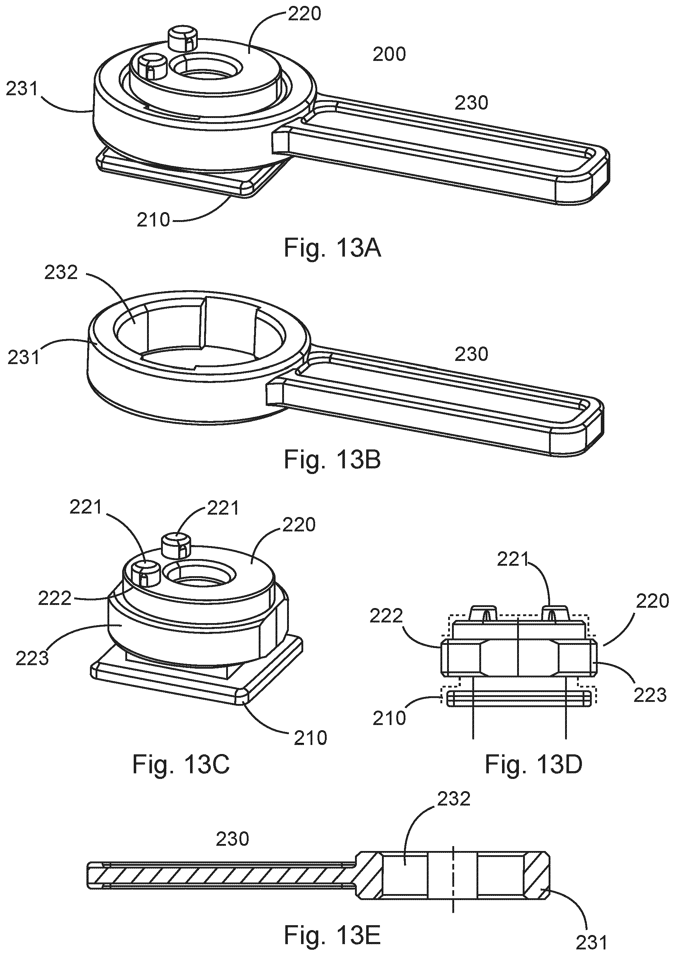

Fig. 13A bis 13E zeigen verschiedene Ansichten eines Blitzschuhadapters. In Fig. 13A ist eine schematische Darstellung des Blitzschuhadapters gezeigt. In Fig. 13B ist ein Hebel oder Griff 230 mit einem äußeren Element 231 dargestellt. In Fig. 13C ist ein Element des Blitzschuhadapters mit einem ersten Ende 210 zur Montage in einem Blitzschuh und einem zweiten Ende 220 zur Montage in oder an der Adapterplatte 100 gezeigt. Das erste Ende 210 ist optional rechteckig ausgestaltet und dazu geeignet, in einen Blitzschuh eingeschoben zu werden. An dem zweiten Ende 220 sind zwei Vorsprünge oder Dome 221 vorgesehen. Diese Dome 221 können in die zweiten Löcher 161 eingeführt werden. Optional kann eine Schraube 240 zur Montage des Blitzschuhadapters 200 vorgesehen sein. Das innere Element 222 weist ein Außengewinde auf. Das äußere Element 231 weist ein Innengewinde auf, welches auf das Außengewinde des inneren Elementes aufgeschraubt werden kann. Das äußere Element 231 ist mit dem Griff oder Hebel 230 gekoppelt, mit welchem das äußere Element 231 gegenüber dem inneren Element 222 verdreht werden kann, so dass das äußere Element 231 auf dem Gewinde seinen Abstand zu dem rechteckigen ersten Ende 210 verändert. Somit kann ein Teil des Blitzschuhs zwischen dem ersten Ende 210 und dem äußeren Element 231 eingeklemmt und somit zuverlässig befestigt werden. Der Hebel 230 dient dazu, die zum Festklemmen notwendige Drehbewegung des äußeren Elementes 231 durchzuführen. Fig. 13D zeigt eine Seitenansicht des inneren Elements 222 und Fig. 13E zeigt eine Schnittansicht des äußeren Elements 231 mit dem Hebel 230.

### Bezugszeichenliste

- 100: Adapterplatte
- 100a: lange Seite
- 100b: kurze Seite
- 100c: lange Seite
- 100d: kurze Seite
- 101: Ecke
- 102: Ecke
- 103: Ecke
- 104: Ecke
- 111: erste Langlochsenke
- 112: zweite Langlochsenke
- 113: dritte Langlochsenke
- 114: vierte Langlochsenke
- 121: dritte Bohrung
- 122: dritte Bohrung
- 123: dritte Bohrung
- 124: dritte Bohrung
- 131: erste Bohrung
- 132: erste Bohrung
- 133: erste Bohrung
- 134: erste Bohrung
- 135: Langloch
- 141: vierte Bohrung
- 142: vierte Bohrung
- 143: vierte Bohrung
- 144: vierte Bohrung
- 145: vierte Bohrung
- 147: vierte Bohrung
- 148: vierte Bohrung
- 149: vierte Bohrung
- 150: vierte Bohrung
- 151: vierte Bohrung
- 152: vierte Bohrung
- 161: Senkbohrung
- 163: Bohrung
- 170: Magnete
- 180: Bohrung
- 181: Gewinde
- 190: Ausnehmungen
- 200: Blitzschuhadapter
- 210: erstes Ende
- 220: zweites Ende
- 221: Dome
- 222: inneres Element
- 223: Außengewinde
- 230: Griff
- 231: äußeres Element
- 232: Innengewinde
- 240: Schraube
- 300: Empfänger
- 301: Oberseite
- 302: Unterseite
- 310: Dome
- 311: Elemente
- 320: Ausnehmungen
- 321: Magneteinheit
- 330: Stativgewindeeinsatz
- 331: Ausnehmungen
- 500: Digitalkamera
- 600: Bügel
- 610: erstes Ende
- 620: zweites Ende
- 700: Schwenkarm

## Patentansprüche

1. Blitzschuhadaptersystem (10) zur Befestigung von Zubehörteilen an einem Blitzschuh, mit
einem Blitzschuhadapter (200) mit einer ersten Seite (210) zur Befestigung in einem Blitzschuh und einer zweiten Seite (220), **gekennzeichnet dadurch dass** das Blitzschuhadaptersystem weiters umfasst:
eine Adapterplatte (100), welche eine Mehrzahl von ersten Bohrungen (131 - 133) zur Befestigung des Blitzschuhadapters (200), eine Mehrzahl von zweiten Bohrungen (161 - 164) zur Befestigung der zweiten Seite (220) des Blitzschuhadapters, vier Ecken (101, 102, 103, 104) jeweils mit einer dritten Bohrung (121 - 124) und mindestens ein magnetisches Element (170) im Bereich der dritten Bohrungen (121 - 124) aufweist,
wobei der Blitzschuhadapter (200) ein inneres Element (222) mit einem Außengewinde (223) und ein darauf aufgeschraubtes äußeres Element (231) mit einem Innengewinde (232) aufweist,
wobei durch eine Drehbewegung zwischen dem inneren Element (222) und dem äußeren Element (231) ein Teil eines Blitzschuhs zwischen dem ersten Ende (210) des inneren Elements (222) und dem äußeren Element (231) festgeklemmt werden kann,
wobei das äußere Element (231) mit einem Hebel (230) versehen ist und wobei die Steigung des Innengewindes (232) und des Außengewindes (223) so vorgesehen sind, dass das Festklemmen an dem Blitzschuh ohne eine vollständige Umdrehung des äußeren Elements (231) möglich ist.

2. Adaptersystem (10) nach Anspruch 1, wobei
die Adapterplatte (100) eine Mehrzahl von vierten Bohrungen (141 - 152) zur Aufnahme von Anbaukomponenten aufweist.

3. Adaptersystem (10) nach Anspruch 1 oder 2, wobei
die Adapterplatte (100) vier Seitenflächen (100a, 100b, 100c, 100d) und mindestens erste und zweite Längsbohrungen oder Langlöcher (111, 113; 112, 114) im Bereich der vier Seitenflächen (100a - 100d) aufweist.

4. Adaptersystem (10) nach einem der Ansprüche 1 bis 3, wobei
die Adapterplatte (100) mindestens eine Bohrung (180) in oder an mindestens zwei der Seitenflächen (100a - 100d) aufweist.

5. Adaptersystem (10) nach einem der Ansprüche 1 bis 4, wobei
der Blitzschuhadapter (200) an seiner zweiten Seite (220) mindestens zwei Dome (221) aufweist, deren Außendurchmesser an einen Innendurchmesser der zweiten Bohrungen (161) angepasst ist, so dass die Dome (221) in die zweiten Bohrungen (161) einführbar sind.

## Claims

1. Hot shoe adapter system (10) for attaching accessories to a hot shoe, comprising
a hot shoe adapter (200) with a first side (210) for attachment in a hot shoe and a second side (220), **characterized in that** the hot shoe adapter system comprises
an adapter plate (100) which has a plurality of first bores (131 - 133) for attaching the hot shoe adapter (200), a plurality of second bores (161 - 164) for attaching the second side (220) of the hot shoe adapter, four corners (101, 102, 103, 104) each with a third bore (121 - 124) and at least one magnetic element (170) in the region of the third bores (121 - 124),
wherein the hot shoe adapter (200) comprises an inner element (222) with an external thread (223) and an outer element (231) screwed onto it with an internal thread (232),
wherein a part of a hot shoe can be clamped between the first end (210) of the inner element (222) and the outer element (231) by a rotational movement between the inner element (222) and the outer element (231),
wherein the outer element (231) is provided with a lever (230) and wherein the pitch of the internal thread (232) and the external thread (223) are provided such that clamping to the hot shoe is possible without a complete rotation of the outer element (231).

2. Adapter system (10) according to claim 1, wherein
the adapter plate (100) has a plurality of fourth bores (141 - 152) for receiving attachment components.

3. Adapter system (10) according to claim 1 or 2, wherein
the adapter plate (100) has four side surfaces (100a, 100b, 100c, 100d) and at least first and second longitudinal bores or elongated holes (111, 113; 112, 114) in the region of the four side surfaces (100a - 100d).

4. Adapter system (10) according to any one of claims 1 to 3, wherein
the adapter plate (100) has at least one bore (180) in or on at least two of the side surfaces (100a - 100d).

5. Adapter system (10) according to any one of claims 1 to 4, wherein
the hot shoe adapter (200) has at least two domes (221) on its second side (220), the outer diameter of which is adapted to an inner diameter of the second bores (161), so that the domes (221) can be inserted into the second bores (161).

## Revendications

1. Système d'adaptateur de sabot de flash (10) pour la fixation d'accessoires sur un sabot de flash, avec
un adaptateur de sabot (200) avec un premier côté (210) de fixation dans un sabot de flash et un second côté (220), **caractérisé en ce que** le système d'adaptateur de sabot de flash comprend par ailleurs :
une plaque d'adaptation (100), qui présente une multitude de premiers alésages (131 - 133) pour la fixation de l'adaptateur de sabot de flash (200), une multitude de deuxièmes alésages (161 - 164) pour la fixation du second côté (220) de l'adaptateur de sabot de flash, quatre coins (101, 102, 103, 104) respectivement avec un troisième alésage (121 - 124) et au moins un élément magnétique (170) dans la zone des troisièmes alésages (121-124),
dans lequel l'adaptateur de sabot de flash (200) présente un élément intérieur (222) avec un filetage extérieur (223) et un élément extérieur (231) vissé dessus avec un filetage intérieur (232),
dans lequel, par un mouvement de rotation entre l'élément intérieur (222) et l'élément extérieur (231), une partie d'un sabot de flash peut être serrée entre la première extrémité (210) de l'élément intérieur (222) et l'élément extérieur (231),
dans lequel l'élément extérieur (231) est pourvu d'un levier (230) et dans lequel la pente du filetage intérieur (232) et du filetage extérieur (223), est prévue de manière à permettre le serrage sur le sabot de flash sans rotation complète de l'élément extérieur (231).

2. Système d'adaptateur (10) selon la revendication 1, dans lequel
la plaque d'adaptation (100) présente une multitude de quatrièmes alésages (141- 152) pour recevoir des composants rapportés.

3. Système d'adaptateur (10) selon la revendication 1 ou 2, dans lequel
la plaque d'adaptation (100) présente quatre faces latérales (100a, 100b, 100c, 100d) et au moins des premiers et des deuxièmes alésages longitudinaux ou trous oblongs (111, 113 ; 112, 114) dans la zone des quatre faces latérales (100a - 100d).

4. Système d'adaptateur (10) selon l'une quelconque des revendications 1 à 3, dans lequel
la plaque d'adaptation (100) présente au moins un alésage (180) dans ou sur au moins deux des faces latérales (100a - 100d).

5. Système d'adaptateur (10) selon l'une quelconque des revendications 1 à 4, dans lequel
l'adaptateur de sabot de flash (200) présente, sur son second côté (220), au moins deux dômes (221) dont le diamètre extérieur est adapté à un diamètre intérieur des deuxièmes alésages (161) de telle sorte que les dômes (221) peuvent être introduits dans les deuxièmes alésages (161).
